# EUROPEAN PATENT APPLICATION

(11) **EP 2 034 697 A2**
(43) Date of publication of application: **11.03.2009**
(21) Application number: 08009025.1
(22) Date of filing: 15.05.2008
(51) Int. Cl.: H04L 29/08, H04L 29/14

(54) **Apparatus and method for transmitting/receiving content in a mobile communication system**

(30) Priority: 15.05.2007 KR 20070047349; 23.07.2007 KR 20070073492
(71) Applicant: Samsung Electronics Co., Ltd., Suwon-si Gyeonggi-do 443-742 (KR)
(72) Inventor: Lee, Jong-Hyo, Suwon-si Gyeonggi-do 443-742 (KR); Hwang, Sung-Oh, Suwon-si Gyeonggi-do 443-742 (KR); Lee, Kook-Heui, Suwon-si Gyeonggi-do 443-742 (KR)
(74) Representative: Grünecker, Kinkeldey, Stockmair & Schwanhäusser Anwaltssozietät

(57) **Abstract**

A method for delivering/receiving content in a mobile communication system. A terminal sends a Content Delivery Repair Request message requiring repair of the content to a server, when reception of the content provided from the server is not normally carried out; and receives a Content Delivery Repair Response message from the server in response to the Content Delivery Repair Request message. The server receives a Content Delivery Repair Request message from the terminal, when reception of the content is not normally carried out at the terminal, and sends a Content Delivery Repair Response message in response to the Content Delivery Repair Request message.

## Description

### BACKGROUND OF THE INVENTION

### 1. Field of the Invention

The present invention relates generally to an apparatus and method for delivering/receiving content in a mobile communication system, and in particular, to an apparatus and method for delivering/receiving content in a dynamic content system.

### 2. Description of the Related Art

The mobile communication markets are faced with constant demands for production of new services through recombination and integration of the existing technologies. The recent development of the communication and broadcast technologies enables the conventional broadcast system and/or mobile communication system to provide broadcast services through portable terminals (or mobile terminals) such as mobile phones and Personal Digital Assistants (PDAs). The convergence of the mobile communication services and Internet Protocol (IP) technologies will become the mainstream in the development of the next generation mobile communication technologies in order to meet potential and actual market demands, increasing user demands for multimedia services, the policies of the service providers intending to provide new services such as broadcast services in addition to the existing voice services, and the interests of Information Technology (IT) companies strengthening their mobile communication businesses to satisfy the needs of consumers.

Open Mobile Alliance (OMA), a group for carrying out research on the standard for interworking between individual mobile solutions, mainly serves to establish various application standards for mobile games, Internet services, etc. In particular, the Open Mobile Alliance Content Delivery (OMA CD) Working Group in the OMA Working Group is conducting studies of Dynamic Content Delivery (DCD) technology. DCD is a service that delivers, to users, content or broadcast data in the field designated by users on a personalized basis, as Internet services are not actively utilized in mobile terminals due to inconvenient search, restricted key entry and low speed, and as user demands for personalized services increases.

In providing the DCD service to a terminal of a user, the content may be actually disconnected during its delivery because of movement of the user and interference occurring in the radio environment, and the terminal needs a method to resume and repair of the content. Currently, as no method to resume and repair is defined in the DCD, there is a need for a technology for solving the disconnection problem.

### SUMMARY OF THE INVENTION

An aspect of the present invention is to address at least the problems and/or disadvantages set forth above and to provide at least the advantages described below. Accordingly, an aspect of the present invention is to provide an apparatus and method for redelivering content that is lost due to wire/wireless errors in a mobile communication system.

Another aspect of the present invention is to provide an efficient redelivery apparatus and method that considers characteristics of different networks such as Peer-to-Peer (P2P) and broadcast networks over which content of broadcast services is delivered, in order to redeliver the content for the broadcast services.

Further another aspect of the present invention is to provide an apparatus and method capable of preventing the unnecessary use of wire/wireless resources to redeliver the broadcast content.

Yet another aspect of the present invention is to provide signaling and message for content repair between a broadcast system server and a terminal to redeliver the content in a digital broadcast service.

According to one aspect of the present invention, there is provided a method for receiving content in a terminal of a mobile communication system. The content reception method includes sending content to a server a Content Delivery Repair Request message requiring repair of the, when reception of the content provided from the server is not normally carried out; and receiving from the server a Content Delivery Repair Response message in response to the Content Delivery Repair Request message.

According to another aspect of the present invention, there is provided a method for delivering content in a server of a mobile communication system. The content delivery method includes receiving a Content Delivery Repair Request message from a terminal, when reception of the content is not normally carried out at the terminal; and sending a Content Delivery Repair Response message in response to the Content Delivery Repair Request message.

According to further another aspect of the present invention, there is provided a terminal apparatus for receiving content from a server in a mobile communication system. The content reception apparatus includes a client module for sending to the server a Content Delivery Repair Request message requiring repair of the content, when reception of the content provided from the server is not normally carried out, and receiving from the server a Content Delivery Repair Response message in response to the Content Delivery Repair Request message.

According to yet another aspect of the present invention, there is provided an apparatus for delivering content in a mobile communication system. The content delivery apparatus includes a server for receiving a Content Delivery Repair Request message from a terminal, when reception of the content is not normally carried out at the terminal, and sending a Content Delivery Repair Response message in response to the Content Delivery Repair Request message.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating DCD configuration and interface configuration in a mobile communication system to which the present invention is applicable;
FIG. 2 is a signaling diagram illustrating a content repair method/procedure according to an embodiment of the present invention;
FIG. 3 is a flowchart illustrating an operation of a terminal according to an embodiment of the present invention; and
FIG. 4 is a flowchart illustrating an operation of a server according to an embodiment of the present invention.

### DETAILED DESCRIPTION OF PREFERRED EMBODIMENTS

Preferred embodiments of the present invention will now be described in detail with reference to the annexed drawings. In the drawings, the same or similar elements are denoted by the same reference numerals even though they are depicted in different drawings. The matters defined in the description such as a detailed construction and elements are provided to assist in a comprehensive understanding of exemplary embodiments of the invention. In the following description, a detailed description of known functions and configurations incorporated herein has been omitted for clarity and conciseness.

Although a description of the present invention will be given herein using the names of entities defined in 3^{rd} Generation Partnership Project (3GPP), which is the 3^{rd} generation mobile communication standard, or in Dynamic Content Delivery (DCD) of Open Mobile Alliance (OMA), which is the standard organization for applications of mobile terminals, by way of example, the standards and their entity names used herein do not limit the scope of the present invention, and the present invention can be applied to other systems having the similar technical background.

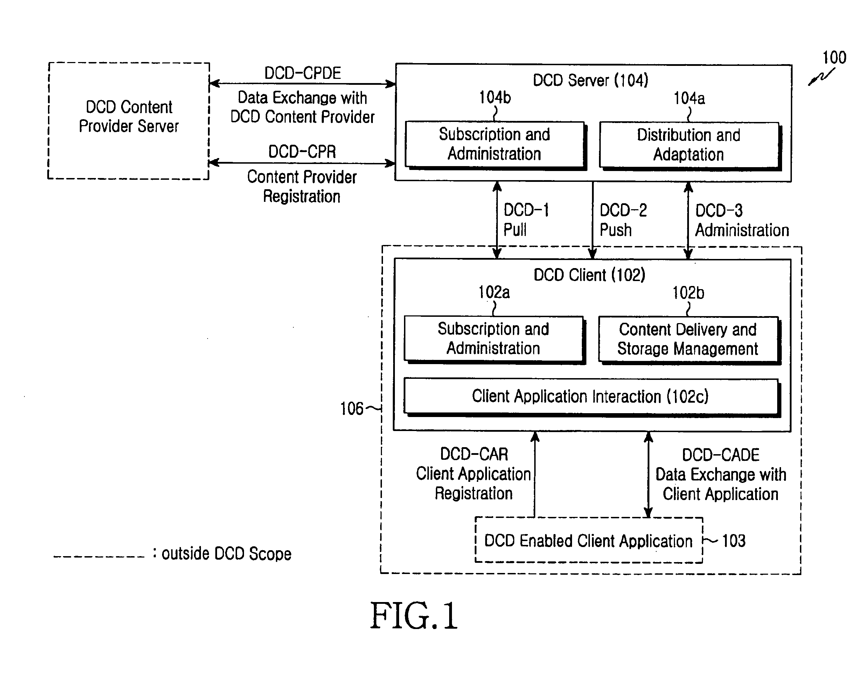

FIG. 1 is a diagram illustrating DCD configuration and interface configuration in a mobile communication system to which the present invention is applicable.

A DCD system 100 includes a DCD Client 102 and a DCD Server 104. The DCD Client 102 is situated in a mobile terminal 106, and is used to access the DCD Server 104. The DCD Client 102 includes three logical functions of a Subscription and Administration function 102a, a Content Delivery and Storage Management function 102b, and a Client Application Interaction function 102c.

Among the elements of the DCD Client 102, the Subscription and Administration function 102a is in charge of exchanging service administration information with the DCD Server 104, and the Content Delivery and Storage Management function 102b is in charge of managing the content received from the DCD Server 104. Finally, the Client Application Interaction function 102c supports a useful function capable of accessing the DCD service from a DCD Enabled Client Application 103 that utilizes the DCD system 100 via the corresponding DCD Client 102.

The DCD Server 104 provides an application-based network function for the DCD service. The DCD Server 104 includes two logical functions: a Distribution and Adaptation function 104a and a Subscription and Administration function 104b. Among the elements of the DCD Server 104, the Subscription and Administration function 104b is in charge of exchanging service administration information with the DCD Client 102, and the Distribution and Adaptation function 104a provides DCD content and DCD content notification to the DCD Client 102. Table 1 shows interfaces used between the elements (or logical entities) of FIG. 1.

**Table 1**

| Interface | Contents |
|---|---|
| DCD-1 | Bi-directional point-to-point interface between the DCD Server and the DCD Client. This interface is used by the DCD Client to send content requests to the DCD Server, and to receive responses. |
| DCD-2 | Uni-directional interface between the DCD Server and the DCD Client. This interface is used by the DCD Server to push notifications and/or content to the DCD Client. The DCD-2 interface could manifest itself as point-to-point push interface or point-to-multipoint broadcast interface. |
| DCD-3 | Bi-directional point-to-point interface between the DCD Server and the DCD Client. This interface is used by the DCD Server and the DCD Client to exchange service administration and configuration information. |
| DCD-CPR | Uni-directional interface between the DCD Content Provider and the DCD Server. This interface is used by the Content Provider to register new content channels with the DCD Server. |
| DCD-CPDE | Bi-directional interface between the DCD Content Provider and the DCD Server. This interface is used by the Content Provider to publish content at the DCD Server and by the DCD Server to retrieve content from the Content Provider. The interface could also be used for exchange of administration information, if applicable. While the interface is bi-directional, only the DCD Server provided interface functions are a subject for standardization. |
| DCD-CAR | Uni-directional interface between the DCD-Enabled Client Application and the DCD Client. This interface is used by the DCD-Enabled Client Application to register with the DCD Client when the application is installed on a handset. |
| DCD-CADE | Bi-directional interface between the DCD-Enabled Client Application and the DCD Client. This interface is used by the DCD Client to send notifications and/or content to the DCD-Enabled Client Application and by the DCD-Enabled Client Application to retrieve content from the DCD Client. The interface could also be used for exchange of administration information, if applicable. While the interface is bi-directional, only the DCD Client provided interface functions are a subject for standardization. |

In providing DCD service to the terminal 106 of a user, the content may be actually disconnected during its delivery because of movement of the user and interference occurring in the radio environment, and the terminal 106 needs a Redeliver/Resume Request & Receive method for repair of the content. Currently, as no Redeliver/Resume method for content repair is defined in DCD, there is a need for a technology for solving the disconnection problem. In terms of the delivery efficiency and resource utilization, it is preferable that Redeliver/Resume should be carried out from the part where the terminal 106 has failed its reception, and since DCD service may use various types of wire/wireless networks during its content delivery, a redelivery method designed considering these matters should be defined.

A description will now be made of a content redelivery apparatus and method in a DCD system of a mobile communication system according to a preferred embodiment of the present invention.

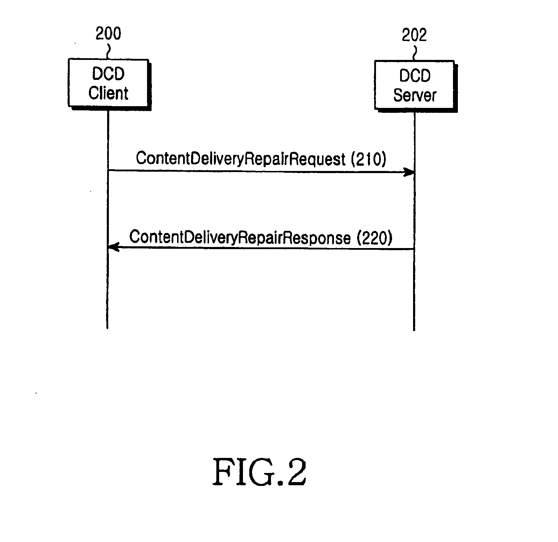

FIG. 2 is a signaling diagram illustrating a content repair method/procedure according to an embodiment of the present invention. Before a description of the content repair method according to an embodiment of the present invention is given, each of the entities shown in FIG. 2 will be described.

A DCD Client 200, which is similar to the DCD Client 102 described in FIG. 1, is mounted in a terminal and supports a function for providing a DCD service at the terminal. In FIG. 2, a function of sending a Content Delivery Repair Request message 210 and receiving a Content Delivery Repair Response message 220 in response thereto can be carried out in a Content Delivery and Storage Management function of the DCD Client 200. A DCD Server 202 is similar to the DCD Server 104 described in FIG. 1, and supports all functions for providing the DCD service to users. Further, in FIG. 2, a function of receiving a Content Delivery Repair Request message 210 from the DCD Client 200 and sending a Content Delivery Repair Response message 220 in response to the Content Delivery Repair Request message 210 can be carried out in a Distribution and Adaptation function of the DCD Server 202.

In FIG. 2, the DCD Client 200, which was receiving content of the DCD service, may recognize that only a part of the content is received due to an error of wire/wireless networks or movement of the terminal, or may recognize that an error occurs in the currently received content due to occurrence of interference during the content reception. In this case, the DCD Client 200 sends a Content Delivery Repair Request message 210 to the DCD Server 202 in step 210. An exemplary format of the Content Delivery Repair Request message sent in step 210 is as shown in Table 2.

**Table 2**

| Information Element | Req | Type | Description |
|---|---|---|---|
| Message-Type | Mandatory | String | Message identifier "ContentDeliveryRepairRequest" |
| Session-ID | Mandatory | String | Session identifier: The Session-ID is unique within the service provider domain. If there is an established Session, a Session-ID must be present. |
| Content-ID | Mandatory | URI | Identifier of content requiring repair |
| Channel-ID | Optional | String | Channel identifier of Content requiring repair |
| Range | Mandatory | Integer | Byte off-set of where to continue content delivery for repair. If this value is zero, the entire content SHALL be redelivered. |
| User ID | Optional | String | Identification number to allow deferred point-to-point delivery. i.e. MSISDN |
| Transport | Optional | Enumerated | Transport originally used to receive erroneous content. Values are {HTTP \|BCAST \|PUSH I CBS \|etc} |
| Message ID | Mandatory | TBD | Identifies this message. The message ID is unique within a current session. |

In Table 2, 'Information Element (IE)' indicates the contents included in the Content Delivery Repair Request message 210, and 'Requirement (Req)' is used for indicating whether the corresponding IE is mandatory or optional. Req=Mandatory means that the corresponding IE is a mandatory IE, Req=Optional means that the corresponding IE is an optional IE, and Req=Conditional means that the corresponding IE is subject to change according to conditions. In addition, 'Type' means a type of the corresponding IE, and herein, it indicates any one of the IE's data types: String, Uniform Resource Identifier (URI), Integer, Enumerated, and To Be Defined (TBD). Moreover, 'Description' means a description of the corresponding IE.

In Table 2, 'Message-Type' is an item assigned to identify a type of the message sent to the DCD Server 202 by the DCD Client 200. 'Session ID' is a Session's identifier indicating an authentication relation between the DCD Client 200 and the DCD Server 202, both of which have subscribed to the DCD service, and with use of the Session ID, the DCD Server 202 authenticates the DCD Client 200. In addition, the DCD Server 202 authenticates the DCD Client 200 by means of the Session ID, and determines that the message sent in step 210 has been sent from the DCD Client 200 having the right for the DCD service.

The Session ID acquisition process is performed between the DCD Client 200 and the DCD Server 202 before content reception for the DCD service, and its detailed method follows the OMA DCD standard. Also, the Session ID also serves to identify a user when the DCD Client 200 uses the DCD service through point-to-point communication between the DCD Client 200 and the DCD Server 202. 'Content ID' indicates an identifier of the content that the DCD Client 200 has failed to completely receive from the DCD Server 202, and it is needed by the DCD Client 200 to notify the DCD Server 202 of the content requiring repair. 'Channel ID' is needed to identify the channel through which the content is delivered. 'Range' is needed to indicate the part additionally required to complete the reception, in the data of the content that needs repair due to a failure in its complete reception.

The Range value is needed to prevent the unnecessary redelivery of the entire content when only a part of the content needs repair. The Range value corresponds to a size of the successfully received data in the corresponding content, and is expressed in bytes. When the Range value is set to '0', it means redelivery of the entire content. For example, in the case where only 2 Mega Bytes (MB) of the 5-MB content has been successfully received, if the DCD Client 200 sends the Content Delivery Repair Request message 210 to the DCD Server 202 after setting its Range field value to 2 MB, the DCD Server 202 can redeliver the remaining 3 MB of the corresponding content, determining that the DCD Client 200 has successfully received only the 2 MB out of the total 5 MB.

'User ID' is an identifier of the user who enjoys the DCD service using the terminal that sent the Content Delivery Repair Request message 210, or is an identifier of the DCD Client 200.

Regarding User ID, since the DCD Client 200, or a user terminal, was receiving the DCD service through a broadcast channel, when a separate user identifier other than Session ID is required in determining suitability of a content redelivery request or when the DCD Server 202 cannot immediately make content repair at the time required by the DCD Client 200, the User ID can be used for paging the DCD Client 200 for later content repair. For example, the User ID is needed to identify the area where the DCD Client 200 is located, when content repair is required in a cellular network through the broadcast system such as Cell Broadcast System (CBS).

Generally, when repairing content through point-to-point communication, the DCD Server 202 is provided with user information during initial authentication, so it can identify a user with the Session ID. 'Transport' is an item used by the DCD Client 200 to notify the DCD Server 202 with which delivery scheme it has received the content identified by the content ID, and reference will be made thereto when the DCD Server 202 carries out redelivery for repair. For example, 'Transport' can indicate delivery through a broadcast channel or a point-to-point channel.

'Message ID' is a value assigned to identify messages being sent in the ongoing session, and is generated in the entity that generates the messages. 'Message ID' can be used for uniquely identifying messages, for example, for identifying an error tracking or duplicated request message during error occurrence.

A Content Delivery Repair Response message being sent in step 220 in response to step 210 in FIG. 2 is a response message to the Content Delivery Repair Request message 210 that the DCD Server 202 has received from the DCD Client 200. In step 220, the DCD Server 202 can immediately deliver repaired content or can later redeliver the deliver repaired content taking the efficiency of wire/wireless resources into account.

If the DCD Client 200, which was receiving content through a broadcast service, sends a delivery repair request to the DCD Server 202 due to its failure in completion of content reception, the DCD Server 202 can immediately repair the content on a point-to-point basis. Otherwise, when the content is repeatedly provided again through a broadcast channel after a lapse of a predetermined time, the DCD Server 202 can provide the expected broadcast schedule without immediately providing the content so that the terminal can repair the content.

When delivering the redelivery-required content later, the DCD Server 202 delivers the repaired content required by the DCD Client 200 through the broadcast channel, because the DCD Server 202 is in the situation where it cannot immediately deliver the content due to the limited processing capacity in the server, or because the DCD Server 202 has received a plurality of redelivery requests. A description will now be made of an embodiment of carrying out content redelivery through the broadcast channel.

The DCD Server 202 intends to carry out redelivery for content repair using the broadcast channel because the content delivery through the broadcast channel can reduce wireless resources due to the large size of the requested content, or because it is efficient to deliver the content to a plurality of terminals through the broadcast channel as there are many repair requests for the same content. Upon receipt of the Content Delivery Repair Response message 220 from the DCD Server 202, the DCD Client 200 delivers the content to an application when the content was delivered along with the received Content Delivery Repair Response message 220. Otherwise, when the content is to be delivered later, the DCD Client 200 receives the repaired content at the time the content is to be delivered, depending on the information in the received Content Delivery Repair Response message 220. An exemplary format of the Content Delivery Repair Response message 220 is as shown in Table 3, and definitions of its items are the same as those in Table 2.

**Table 3**

| Information Element | Req | Type | Description |
|---|---|---|---|
| Message-Type | Mandatory | String | Message identifier "ContentDeliveryRepairResponse" |
| Session-ID | Mandatory | String | Session identifier. The Session-ID is unique within the service provider domain. |
| | | | If there is an established Session, a Session-ID must be present. |
| Alternative Delivery | Conditional | Data Structure | If the DCD Server cannot immediately respond with the content that the DCD Client has requested, this Data Structure SHALL indicate when and how to receive the requested content. |
| Content | Conditional | Data Structure | Requested content package for repair. |
| Message ID | Mandatory | TBD | Identifies this message. The Message ID is unique within a current session. |

Table 3 shows an exemplary format of the Content Delivery Repair Response message used in step 220. 'Message-Type' in Table 3 is an item assigned to identify a type of the message sent to the DCD Client 200 by the DCD Server 202, and indicates the Content Delivery Repair Response message used in step 220. 'Session-ID' and 'Message-ID' are the same as described in Table 2, and 'Content' indicates the actually repair-requested content, i.e., indicates the content repair-requested by the terminal. The 'Content' is inserted into the Content Delivery Repair Response message 220 in the form of Multipurpose Internet Mail Extension (MIME) for its delivery.

'Alternate Delivery' is an item used by the DCD Server 202 to notify the DCD Client 200 how it will deliver the repaired content later, when it cannot immediately deliver the repaired content. Sub-items of the 'Alternate Delivery' item will be described in detail in Table 4.

**Table 4**

| Information Element | Req | Type | Description |
|---|---|---|---|
| Transport | Mandatory | Enumerated | Transport mechanism to receive requested content. Values are {HTTP I BCAST I PUSH \|CBS\|etc} |
| Time | Conditional | String | Expected time of content delivery. |
| BCAST Data | Conditional | Data Structure | The list of BCAST Service, Access and Schedule fragments related to delivery of repair content. Note: The IDs of fragments are unique in One Service Provider Domain. |

Table 4 shows the detailed sub-items of the 'Alternate Delivery' item among the items of the message used in step 220. As described in Table 3, the 'Alternate Delivery' item is an item used by the DCD Server 202 to defer the delivery because it cannot immediately deliver the content, or to defer the delivery for efficient delivery. The repair deferment is provided by deferring the content repair for multiple users through broadcast.

The repair deferment can be used when the broadcast system is efficient for high-capacity delivery, compared with the point-to-point communication system. The content repair through broadcast can be suitably used when users adjacent to a particular area simultaneously request repair for the same content as they have a problem while receiving the same content. A 'Transport' element in Table 4 is an item used by the DCD Server 202 to identify which delivery system or protocol it will use for repair.

'Time' is needed to notify the DCD Client 200 when the repaired content will be delivered, in indicating the expected time the deferred repair is to be carried out. The 'Time' should be known when a broadcast system such as CBS is used, and can be used even when the content is repaired through deferred point-to-point repair instead of the broadcast system. 'BCAST Data' contains information notifying the DCD Client 200 how it can determine the repaired content when the content is repaired through the BCAST system. The 'BCAST Data' item, during its transmission, includes identifiers of the necessary Service Fragment, Schedule Fragment, and Access Fragment in the BCAST service guide through which delivery information and schedule information for the content are transmitted, so that the DCD Client 200 can receive the content over the BCAST system. The detailed configuration information for the service guide fragments of BCAST are specified in OMA BCAST Technical Specification Service Guide.

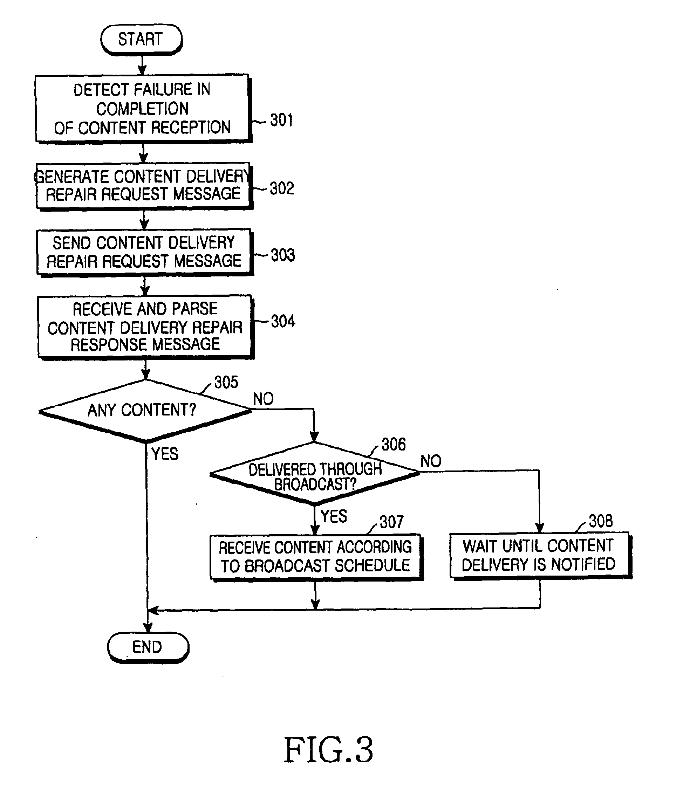

FIG. 3 is a flowchart illustrating an operation of a terminal according to an embodiment of the present invention. The flowchart of FIG. 3 can be carried out in a Content Delivery and Storage Management function 102b of a DCD Client 200.

In step 301, a terminal detects a failure in completion of content reception, and calculates the amount of missing content. After calculating the amount of missing content, the terminal generates a Content Delivery Repair Request message defined in Table 2 in step 302. In this case, the terminal sets the required amount of data in the Range field when it needs a partial repair, i.e., when it needs to resume, and the terminal sets the Range field to '0' when it needs the entire repair. Also, the terminal can notify its currently used delivery scheme to which the server may make reference when selecting the delivery scheme in repair preparation. For repair through broadcast, a number such as Mobile Subscriber ISDN Number (MSISDN) for identification of a user terminal should also be transmitted. The Content Delivery Repair Request message generated in step 302 is sent to the server in step 303.

After sending the Content Delivery Repair Request message in step 303, the terminal waits for a Content Delivery Repair Response message in response to the Content Delivery Repair Request message. In step 304, upon receipt of the Content Delivery Repair Response message, the terminal parses the contents of the received Content Delivery Repair Response message. After parsing the contents of the received Content Delivery Repair Response message, a DCD Client 200 in the terminal determines in step 305 if there is any content inserted into the message. If there is content inserted into the message, the DCD Client 200 immediately delivers the content to a DCD Enabled Client Application 103 in the terminal, at which the content is to be used.

However, if no content is inserted into the message and the scheduled repair method indicates delivery through broadcast such as BCAST and CBS, the DCD Client 200 prepares , in step 306, for reception according to the information of an 'Alternate Delivery' item defined in Table 4, and receives the content according to the given time and method in step 307. In step 307, if the repair is expected to be done by BCAST, the DCD Client 200 prepares for makes reception using the BCAST information, and when there is no BCAST information, the DCD Client 200 only needs to receive the content through CBS at the designated time. However, if it is determined in step 306 that the corresponding content, though it will undergo deferred repair, is not expected to be repaired through broadcast, the DCD Client 200 proceeds to step 308 where it waits for the content according to the information of the 'Alternate Delivery' item specified in Table 4.

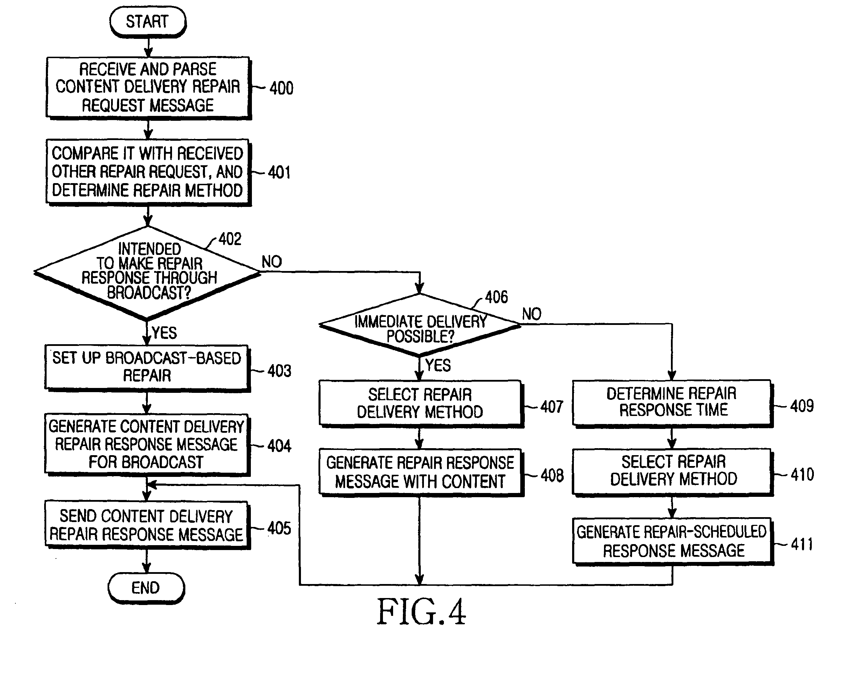

FIG. 4 is a flowchart illustrating an operation of a server according to an embodiment of the present invention. The flowchart of FIG. 4 can be performed in a Distribution and Adaptation function 104a of a DCD Server 202.

Upon receipt of a Content Delivery Repair Request message from a terminal in step 400, a server determines in step 401 if there is any Content Delivery Repair Request message received from another terminal, which is the same as the Content Delivery Repair Request message received from the terminal. Due to the time required for the determination process, the server temporarily defers the overall process required for making content repair, and receives a redelivery request message for the same content from other terminals for a predetermined time. In particular, when content of the DCD service was originally delivered through the broadcast channel, since the same repair requests may be received from multiple terminals, the server may wait while holding the process for a predetermined time. This is because when there are redelivery requests for the same content from multiple terminals, the server can efficiently use wire/wireless resources by redelivering the content through the broadcast channel, rather than delivering the content to the terminals on a point-to-point basis. As the repair method is determined in step 401, the server determines in step 402 if it will make a repair through broadcast.

If it is determined in step 402 that there is a need for content repair through the broadcast channel, the server sets up broadcast-based repair in step 403. For example, when BCAST is used for redelivery of the DCD content, the server determines the schedule indicating the time that the content will be delivered, and also determines the channel through which the content will be delivered, and based on this information, the server generates a Content Delivery Repair Response message specified in Table 3 in step 404. The Content Delivery Repair Response message generated in step 404 is delivered to the terminal in step 405.

That is, in step 403, the server delivers information on the services delivered according to the attribute of broadcast, to all terminals in the receivable area through the broadcast channel, and the terminals each determine if there is a need to receive the corresponding service or content using their received information, thereby finally determining if they will receive the service or content.

If it is determined in step 402 that the server will not make a repair through broadcast, the server determines in step 406 if it can immediately make a repair for the terminal. If it is determined in step 406 that it can immediately make a repair, the server selects a delivery method to be used for the repair in step 407. In this case, for example, the server can immediately provide repaired content through an interaction network. According to the delivery method selected in step 407, the server generates a Content Delivery Repair Response message specified in Table 3 in step 408, and sends the generated Content Delivery Repair Response message to the terminal in step 405. However, if it is determined in step 406 that it cannot immediately make a repair, the server proceeds to step 409 indicating a situation of the deferred point-to-point repair. In step 409, the server determines a time for deferred repair, and based on the result, the server determines a delivery method in step 410. In step 411, the server generates a Content Delivery Repair Response message defined in Table 3 based on the information determined in steps 409 and 410, and then proceeds to step 405 where it sends the generated Content Delivery Repair Response message to the terminal.

As is apparent from the foregoing description, in carrying out content redelivery that can occur due to several reasons when providing content in the mobile communication system, the present invention can redeliver the content to the terminal requiring the redelivery by efficiently utilizing the wire/wireless resources in the network providing the content service.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for receiving content in a terminal of a mobile communication system, the method comprising:
sending a request message requiring repair of the content to a server, when reception of the content provided from the server is not normally carried out; and
receiving a response message from the server in response to the request message.

2. A method for delivering content in a server of a mobile communication system, the method comprising:
receiving a request message from a terminal, when reception of the content is not normally carried out at the terminal; and
sending a response message in response to the request message.

3. The method of claim 1 or 2, wherein the request message includes at least one of a session identifier (Session-ID) indicating an authentication relation between the terminal and the server, a content identifier (Content-ID) of the content provided from the server, and a range value for determining a content range requiring the repair.

4. The method of claim 3, wherein the request message further includes at least one of a message type (Message-Type) for identifying a type of the message that the terminal sends to the server, a channel identifier (Channel-ID) for identifying a channel through which the content is delivered, a user identifier (User-ID) of the terminal that sent the request message, and a Transport for notifying with which delivery scheme the server has received the content identified by the Content-ID.

5. The method of claim 3 or 4, wherein the range value indicates a size of successfully received data in the content provided from the server, and is expressed in bytes.

6. The method of claim 3 or 4, wherein the range value is set to '0' when the terminal wants repair of the entire content.

7. The method of claim 1 to 6, wherein the response message includes content in the repair-requested range.

8. The method of claim 1 to 7, wherein the reception is not normally carried out in at least one of a case where only a part of the content is received, and a case where interference occurs during the content reception.

9. A apparatus for receiving content from a server in a mobile communication system, the apparatus comprising:
a client module for sending a request message requiring repair of the content to the server, when reception of the content provided from the server is not normally carried out, and receiving a response message from the server in response to the request message.

10. An apparatus for delivering content in a mobile communication system, the apparatus comprising:
a server for receiving a request message from a terminal, when reception of the content is not normally carried out at the terminal, and sending a response message in response to the request message.

11. The apparatus of claim 9 or 10, wherein the request message includes at least one of a session identifier (Session-ID) indicating an authentication relation between the terminal and the server, a content identifier (Content-ID) of the content provided from the server, and a range value Range for determining a content range requiring the repair.

12. The apparatus of claim 11, wherein the request message further includes at least one of a message type (Message-Type) for identifying a type of the message that the terminal sends to the server, a channel identifier (Channel-ID) for identifying a channel through which the content is delivered, an identifier (User-ID) of the terminal that sent the request message, and a Transport for notifying with which delivery scheme the server has received the content identified by the Content-ID.

13. The apparatus of claim 11 or 12, wherein the range value indicates a size of successfully received data in the content provided from the server, and is expressed in bytes.

14. The apparatus of claim 9 to 13, wherein the response message includes content in the repair-requested range.

15. The apparatus of claim 11 or 12, wherein the range value is set to '0' when the terminal wants repair of the entire content.
